# EUROPEAN PATENT APPLICATION

(11) **EP 4 800 044 A1**
(43) Date of publication of application: **02.09.2026**
(21) Application number: 24882337.9
(22) Date of filing: 21.10.2024
(51) Int. Cl.: C08F 259/08, C08F 2/22, C08F 2/44, C08F 214/18

(54) **METHOD FOR PRODUCING FLUORINE-CONTAINING POLYMER**

(30) Priority: 23.10.2023 JP 2023181636
(71) Applicant: AGC Inc., Chiyoda-ku Tokyo 100-8405 (JP)
(72) Inventor: SHIBASAKI Kosuke, Tokyo 100-8405 (JP); YOSHIZAWA Toshiki, Tokyo 100-8405 (JP); TOYODA Mizuna, Tokyo 100-8405 (JP); TAGUCHI Daisuke, Tokyo 100-8405 (JP)
(74) Representative: Müller-Boré & Partner Patentanwälte PartG mbB
(86) International application number: PCT/JP2024/037375
(87) International publication number: WO 2025/089224

(57) **Abstract**

To provide a method for producing a fluorinated polymer, by which a fluorinated polymer excellent in heat resistance can be produced.

A method for producing a fluorinated polymer, which comprises polymerizing a monomer containing a C₂₋₈ perfluoroolefin using a polymerization initiator X in an aqueous dispersion that contains a polymer having a hydrophilic group and an aqueous medium, wherein the polymerization initiator X has no hydrophilic group and has a molecular weight of 200 or less.

## Description

### TECHNICAL FIELD

The present invention relates to a method for producing a fluorinated polymer.

### BACKGROUND ART

Fluorinated polymers, such as tetrafluoroethylene-based copolymers, are used in various industrial fields by virtue of excellent heat resistance, chemical resistance, flame retardancy, weather resistance, etc.

As a method for producing the fluorinated polymer, a method of emulsionpolymerizing a fluorinated monomer in an aqueous medium using a polymerization initiator having a hydrophilic group may be mentioned (Patent Document 1).

### PRIOR ART DOCUMENTS

### PATENT DOCUMENTS

Patent Document 1: WO2020/196779

### DISCLOSURE OF INVENTION

### TECHNICAL PROBLEM

By the method for producing a fluorinated polymer in Patent Document 1, the heat resistance of the obtainable fluorinated polymer should still be improved.

It is an object of the present invention to provide a method for producing a fluorinated polymer, by which a fluorinated polymer excellent in heat resistance can be produced.

### SOLUTION TO PROBLEM

The present inventors have conducted extensive studies and as a result found that the above object can be achieved by the following configurations.
[1] A method for producing a fluorinated polymer, which comprises polymerizing a monomer containing a C₂₋₈ perfluoroolefin using a polymerization initiator X in an aqueous dispersion that contains a polymer having a hydrophilic group and an aqueous medium to produce a fluorinated polymer,
   wherein the polymerization initiator X has no hydrophilic group and has a molecular weight of 200 or less.
[2] The method for producing a fluorinated polymer according to [1], wherein the polymerization initiator X is a compound represented by the formula (X) mentioned below.
[3] The method for producing a fluorinated polymer according to [1] or [2], wherein the polymer having a hydrophilic group is a fluorinated polymer having a hydrophilic group.
[4] The method for producing a fluorinated polymer according to any one of [1] to [3], wherein the polymer having a hydrophilic group contains units based on tetrafluoroethylene and units based on a perfluoro(alkyl vinyl ether).

### ADVANTAGEOUS EFFECTS OF INVENTION

According to the present invention, it is possible to provide a method for producing a fluorinated polymer, by which a fluorinated polymer excellent in heat resistance can be produced.

### DESCRIPTION OF EMBODIMENTS

Meanings of terms used in this specification are as follows.

In this specification, " to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

In this specification, "units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by nuclear magnetic resonance spectroscopy (NMR). Usually, the content of each units calculated from the amount of charge of each monomer substantially agrees with the actual content of each units.

### [Method for producing fluorinated polymer]

The method for producing a fluorinated polymer of the present invention (hereinafter also referred to as "the present production method") is a method for producing a fluorinated polymer, which comprises polymerizing a monomer containing a C₂₋₈ perfluoroolefin (hereinafter also referred to as "specific monomer") using a polymerization initiator X in an aqueous dispersion that contains a polymer having a hydrophilic group and an aqueous medium, to produce a fluorinated polymer (hereinafter also referred to as "second fluorinated polymer"),
wherein the polymerization initiator X has no hydrophilic group and has a molecular weight of 200 or less.

The present inventors have found the following. That is, if a conventional technique, for example a polymerization initiator having a hydrophilic group is used, a structure derived from the polymerization initiator having a hydrophilic group is added in the resulting fluorinated polymer and deteriorates heat resistance of the fluorinated polymer.

It is estimated that, on the other hand, since the polymerization initiator X has no hydrophilic group, no structure which may cause deterioration of the heat resistance is added, and since the polymerization initiator X has a specific molecular weight, the specific monomer can sufficiently be polymerized in the aqueous dispersion, and thus by the present production method, a fluorinated polymer excellent in heat resistance can be produced.

### <Aqueous dispersion>

In the present production method, the aqueous dispersion that contains the polymer having a hydrophilic group and an aqueous medium is used.

### (Polymer having hydrophilic group)

The aqueous dispersion contains a polymer having a hydrophilic group.

The polymer having a hydrophilic group is a polymer compound having a hydrophilic group and having a plurality of units based on a monomer.

The polymer having a hydrophilic group is preferably a polymer compound having a hydrophilic group, different from the second fluorinated polymer.

The hydrophilic group may, for example, be a hydroxy group or an ionic functional group. The ionic functional group may be either a cationic functional group or an anionic functional group. Specific examples of the ionic functional group include anionic functional groups such as a carboxylate group (-COO⁻), a sulfonate group (-SO₃⁻), a sulfate group (-SO₄²⁻), a phosphonate group (-PO₃²⁻) and a phosphate group (-PO₄³⁻). The hydrophilic group is preferably a monovalent group.

The polymer having a hydrophilic group may have one or more hydrophilic groups. The polymer having a hydrophilic group may have the hydrophilic group at its side chain or at its terminal end.

The polymer having a hydrophilic group may, for example, be a fluorinated polymer having a hydrophilic group (hereinafter also referred to as "first fluorinated polymer"), and a polymer emulsifier having a hydrophilic group, and is preferably the first fluorinated polymer.

### <<First fluorinated polymer>>

It is estimated as follows. That is, the first fluorinated polymer is a polymer having a hydrophilic group and a hydrophobic moiety. The hydrophilic group in the first polymer is mainly derived from the residue of a water-soluble initiator mentioned below, present at the terminal end of the polymer, or from a side chain structure of the polymer. Further, the hydrophobic moiety in the first fluorinated polymer is derived from units formed by polymerization of a monomer having a fluorine atom mentioned below. The first fluorinated polymer, at the time of polymerization of the specific monomer in its presence, adsorbs and includes the specific monomer at its hydrophobic moiety to solubilizer the specific monomer, and by adding the polymerization initiator X thereto, the specific monomer is polymerized in particles of the first fluorinated polymer, Further, the first fluorinated polymer contributes to dispersion stabilization of the components in the aqueous medium.

The first fluorinated polymer is preferably different from the second fluorinated polymer.

The first fluorinated polymer is a polymer having fluorine atoms. The first fluorinated polymer is a polymer containing units based on a monomer having a fluorine atom.

The first fluorinated polymer preferably contains, as the units based on a monomer having a fluorine atom, units based on tetrafluoroethylene (hereinafter also referred to as "TFE") (hereinafter also referred to as "TFE units"), and units based on a perfluoro(alkyl vinyl ether) (hereinafter also referred to as "PAVE") (hereinafter also referred to as "PAVE units").

PAVE is preferably a monomer represented by the formula (1), whereby excellent polymerizability at the time of production of the first fluorinated polymer is achieved and the second fluorinated polymer can be produced more efficiently.

CF₂=CF-O-R^{f1} (1)

In the formula (1), R^{f1} is a C₁₋₁₀ perfluoroalkyl group.

The number of carbon atoms in R^{f1} is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter sometimes referred to as "PMVE"), perfluoro(ethyl vinyl ether) (hereinafter sometimes referred to as "PEVE") and perfluoro(propyl vinyl ether) (hereinafter sometimes referred to as "PPVE"), and among them, preferred are PMVE and PPVE, more preferred is PMVE, whereby the second fluorinated polymer can be produced more efficiently.

When the first fluorinated polymer contains the TFE units and the PAVE units, in the first fluorinated polymer, the content of the PAVE units to the total amount of the TFE units and the PAVE units is preferably 20.0 to 60.0 mol%, more preferably 25.0 to 60.0 mol%, further preferably 30.0 to 55.0 mol%.

When the first fluorinated polymer contains the TFE units and the PAVE units, in the first fluorinated polymer, the total content of the TFE units and the PAVE units to all units in the first fluorinated polymer is preferably 90.0 to 100.0 mol%, more preferably 95.0 to 100.0 mol%, further preferably 99.0 to 100.0 mol%.

The first fluorinated polymer may contain units based on a monomer other than TFE and PAVE.

The other monomer is preferably hexafluoropropylene.

The first fluorinated polymer preferably contains substantially no units based on other monomer, whereby the second fluorinated polymer can be produced more efficiently.

The wording "contains substantially no units based on other monomer" means that the content of units based on other monomer is 0.01 mol% or less to all units in the first fluorinated polymer, and the content is more preferably 0 mol%.

The first fluorinated polymer is preferably constituted by the TFE units and the PAVE units. In this case, the ratio of the TFE units to the PAVE units in the first fluorinated polymer is, as represented by TFE units/PAVE units, preferably 80.0 to 40.0 mol%/20.0 to 60.0 mol%, more preferably 75.0 to 40.0 mol%/25.0 to 60.0 mol%, further preferably 70.0 to 45.0 mol%/30.0 to 55.0 mol%.

Before start of the polymerization of the monomer used for production of the second fluorinated polymer (specific monomer), the content of the first fluorinated polymer is, to the total mass of the aqueous medium in the aqueous dispersion, 0.01 to 4.0 mass%, and preferably 0.01 to 0.6 mass%, more preferably 0.01 to 0.5 mass%, whereby the second fluorinated polymer can be produced more efficiently.

In this specification, "before start of the polymerization of the monomer used for production of the second fluorinated polymer" means immediately before the polymerization start point. The "polymerization start point" means a point when the monomer and the polymerization initiator are allowed to coexist in a reactor after the interior of the reactor is heated to the polymerization temperature or higher, a point when the interior of the reactor is heated to the polymerization temperature or higher after the monomer and the polymerization initiator X are allowed to coexist in the reactor, or the like.

The first fluorinated polymer is dispersed in the aqueous medium preferably in the form of particles.

The average particle size of the first fluorinated polymer is preferably 1 to 150 nm, more preferably 10 to 120 nm, further preferably 50 to 120 nm, whereby the second fluorinated polymer can be produced more efficiently.

The average particle size of the first fluorinated polymer is a particle size (D50) at a point where the cumulative volume is 50% on a cumulative curve obtained by measuring the particle size distribution by laser diffraction/scattering method and taking the whole volume of the group of particles to be 100%, and detailed measurement conditions are as shown in the after-described Examples.

The method for producing the first fluorinated polymer is preferably a method of polymerizing the monomer (preferably a monomer mixture containing TFE and PAVE) in the aqueous medium in the presence of a polymerization initiator, whereby the first fluorinated polymer dispersed in the form of particles in the aqueous medium can be obtained.

The aqueous medium thus obtained, having particles of the first fluorinated polymer dispersed therein, may be used as it is as the aqueous dispersion, or may be mixed with another aqueous medium and used as the aqueous dispersion. Otherwise, solvent replacement may be conducted to disperse the first fluorinated polymer in another aqueous medium, and the resulting dispersion may be used as the aqueous dispersion.

The polymerization initiator to be used of production of the first fluorinated polymer is preferably a water-soluble polymerization initiator, more preferably a persulfate or an organic polymerization initiator, further preferably a persulfate.

Specific examples of the persulfate include ammonium persulfate, sodium persulfate and potassium persulfate, and ammonium persulfate is preferred.

In a case where the water-soluble polymerization initiator is used, a hydrophilic group derived from the water-soluble polymerization initiator is introduced into the resulting fluorinated polymer, whereby the first fluorinated polymer will easily be synthesized.

Specific examples of the organic polymerization initiator include disuccinic persulfate and azobisisobutylamidine dihydrochloride.

The aqueous medium used for production of the first fluorinated polymer may be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

### <<Polymer emulsifier having hydrophilic group>>

The polymer emulsifier having a hydrophilic group may be an emulsifier having a hydrophilic group at its side chain.

Specifically, a polymer containing units based on a compound having a polymerizable group and a hydrophilic group or a group convertible to a hydrophilic group, may be mentioned. The group convertible to a hydrophilic group refers to a group which exhibits hydrophilicity by post-treatment such as hydrolysis.

Specific examples of the polymer emulsifier having a hydrophilic group include a polyvinylsulfonic acid and a polymethyl methacrylate.

### (Aqueous medium)

The aqueous dispersion contains an aqueous medium.

The aqueous medium contained in the aqueous dispersion may be the polymerization solvent used for production of the first fluorinated polymer, as described above.

Specific examples of the aqueous medium contained in the aqueous dispersion are the same as the specific examples of the aqueous medium used for the production of the first fluorinated polymer described above.

Before the start of the polymerization of the monomer used for production of the second fluorinated polymer, the content of the aqueous medium is preferably 60 to 99.9 mass%, more preferably 96 to 99.9 mass%, further preferably 98 to 99.9 mass%, to the total mass of the aqueous dispersion.

### (Other component)

The aqueous dispersion may contain a component other than the polymer having a hydrophilic group and the aqueous medium.

Specific examples of the other component include a chain transfer agent, a pH adjusting agent and a wax.

Specific examples of the chain transfer agent include ethyl acetate, methanol, ethanol, t-butyl methyl ether (t-BuOMe), diethyl ether, n-pentane, cyclohexane, methane and propane.

Specific examples of the pH adjusting agent include inorganic salts.

Specific examples of the inorganic salts include phosphates such as disodium hydrogen phosphate and sodium dihydrogen phosphate, and carbonates such as sodium hydrogen carbonate and sodium carbonate. The phosphate is more preferably disodium hydrogen phosphate dihydrate or disodium hydrogen phosphate dodecahydrate.

Specific examples of the wax include Paraffin Wax-155 and Paraffin Wax-150 (each manufactured by NIPPON SEIRO CO., LTD.).

In a case where the aqueous dispersion contains the chain transfer agent, the content of the chain transfer agent is preferably 0.1 to 5 parts by mass per 100 parts by mass of the aqueous medium. The amount of the chain transfer agent used is preferably 0.1 to 20 parts by mass, more preferably 0.1 to 15 parts by mass, further preferably 0.1 to 10 parts by mass, per 100 parts by mass of the specific monomer used, mentioned below.

In a case where the aqueous dispersion contains the pH adjusting agent, the content of the pH adjusting agent is preferably 0.01 to 3.0 parts by mass per 100 parts by mass of the aqueous medium.

In a case where the aqueous dispersion contains the wax, the content of the wax is preferably 1 to 10 parts by mass per 100 parts by mass of the aqueous medium.

Before the start of the polymerization of the monomer used for production of the second fluorinated polymer, the concentration of fluoride ions is preferably 100 mass ppm or less, more preferably 50 mass ppm or less to the total mass of the aqueous dispersion, in view of polymerization stability. The lower limit may be 0 mass ppm.

As an example of a method to adjust the concentration of fluoride ions to be within the above range, a method of removing the sulfate ions using an anion exchange resin at the time of production of the first fluorinated polymer may be mentioned.

The fluoride ions may sometimes be formed by a reaction of the polymerization initiator (such as ammonium persulfate) and the monomer used for production of the first fluorinated polymer and be contained in the aqueous dispersion.

Before the start of the polymerization of the monomer used for production of the second fluorinated polymer, the concentration of sulfate ions is preferably 10 mass ppm or less, more preferably 5 mass ppm or less to the total mass of the aqueous medium in the aqueous dispersion, whereby coloring of the second fluorinated polymer will be suppressed. The lower limit may be 0 mass ppm.

As an example of a method to adjust the concentration of sulfate ions to be within the above range, a method of removing the sulfate ions using an anion exchange resin at the time of production of the first fluorinated polymer may be mentioned.

The sulfate ions may be derived, for example, from the polymerization initiator (particularly ammonium persulfate) used at the time of production of the first fluorinated polymer, and may sometimes be contained in the aqueous dispersion containing the first fluorinated polymer. It is estimated that by the sulfate ion content being 10 mass ppm or less (particularly 5 mass ppm or less), formation of a low heat resistant terminal end group in the second fluorinated polymer is suppressed and as a result, coloring of the second fluorinated polymer is suppressed.

Before the start of the polymerization of the monomer used for production of the second fluorinated polymer, the concentration of the water-soluble polymerization initiator is preferably 20 mass ppm or less, more preferably 10 mass ppm or less to the total mass of the aqueous medium in the aqueous dispersion, whereby the second fluorinated polymer will be excellent in heat resistance. The lower limit may be 0 mass ppm.

As an example of the method of adjusting the water-soluble polymerization initiator to be within the range, a method of removing the water-soluble polymerization initiator using an anion exchange resin at the time of production of the first fluorinated polymer, and a method of deactivating the water-soluble polymerization initiator may be mentioned.

Here, the water-soluble polymerization initiator may, for example, be the water-soluble polymerization initiator (particularly ammonium persulfate) used at the time of production of the first fluorinated polymer, and may sometimes be contained in the aqueous dispersion containing the first fluorinated polymer. It is estimated that by the content of the water-soluble polymerization initiator being 20 mass ppm or less, heat resistance of the second fluorinated polymer improves.

### <Specific monomer>

In the present production method, a specific monomer is used.

The specific monomer contains a C₂₋₈ perfluoroolefin.

The number of carbon atoms of the C₂₋₈ perfluoroolefin is 2 to 8, preferably 2 to 5, more preferably 2 or 3.

Specific examples of the C₂₋₈ perfluoroolefin include TFE and hexafluoropropylene, PAVE, and perfluoroallyl ether. The C₂₋₈ perfluoroolefin may be used in combination of two or more types.

PAVE is similar to the PAVE in the first fluorinated polymer and the preferred embodiment is also the same.

The perfluoroallyl ether (hereinafter also referred to as "PAAE") is preferably a compound represented by the following formula (2).

CX²¹X²²=CX²³(CX²⁴X²⁵)-O-(CX²⁶X²⁷)ₘ₂-L²-(CX²⁸X²⁹)ₙ₂-A² (2)

In the formula (2), X²¹, X²², X²³, X²⁴, X²⁵, X²⁶, X²⁷, X²⁸ and X²⁹ are each independently a fluorine atom or a fluoroalkyl group,
m2 is an integer of 1 to 10,
n2 is an integer of 0 to 10,
L2 is a single bond or a bivalent linking group, and
the terminal end group A2 is a hydrogen atom or a fluorine atom.
X²¹, X²², X²³, X²⁴, X²⁵, X²⁶, X²⁷, X²⁸ and X²⁹ are preferably a fluorine atom.
m2 is preferably 1 to 6, more preferably 1 to 3.
n2 is preferably 0.

The bivalent linking group represented as L² is preferably an alkylene group, - CH=CH-, -C≡C-, -O-, -S-, -CO-, -COO-, -OCO-, -CONR³¹-, -NR³²CO-, or a combination thereof.

R³¹ and R³² are each independently a hydrogen atom or an alkyl group.

L2 is preferably a single bond.

A2 is a fluorine atom.

In particular, the perfluoroallyl ether is preferably a compound represented by the following formula (2A).

CF₂=CF-CF₂O-R^{f2} (2A)

In the formula (2A), R^{f2} is a C₁₋₁₀ fluoroalkyl group. The number of carbon atoms of R^{f2} is, in view of more excellent polymerizability, preferably 1 to 8, more preferably 1 to 6, further preferably 1 to 5, particularly preferably 1 to 3.

The fluoroalkyl group may be linear or branched.

Specific examples of PAAE include perfluoro(methyl allyl ether) (hereinafter also referred to as "PMAE"), perfluoro(ethyl allyl ether) (hereinafter also referred to as "PEAE") and perfluoro(propyl allyl ether) (hereinafter also referred to as "PPAE"). In particular, from the viewpoint of excellent polymerizability, PAAE is preferably PMAE or PPAE, more preferably PMAE.

The amount of the C₂₋₈ perfluoroolefin used is, to the amount of the specific monomer used, preferably 10.0 to 100.0 mol%, more preferably 30.0 to 70.0 mol%, further preferably 40.0 to 60.0 mol%. In a case where TFE, hexafluoropropylene, PAVE and/or PPAE is used as the C₂₋₈ perfluoroolefin also, the preferred embodiment of the amount used is the same.

In a case where heat resistance of the second fluorinated polymer is important, it is preferably 90.0 to 99.9 mol%, and when melt-moldability is important, it is preferably 95.0 to 99.0 mol%.

The specific monomer may contain a fluorinated monomer other than the C₂₋₈ perfluoroolefin (hereinafter also referred to as "other fluorinated monomer").

Specific examples of the other fluorinated monomer include chlorotrifluoroethylene (hereinafter also referred to as "CTFE"), vinylidene fluoride (hereinafter also referred to as "VdF") and fluoroalkylethylene (hereinafter also referred to as "FAE"). The other fluorinated monomer may be used in combination of two or more types.

Specific examples of FAE include CH₂=CH(CF₂)₂F, CH₂=CH(CF₂)₃F, CH₂=CH(CF₂)₄F (hereinafter also referred to as "C4OLF"), CH₂=CF(CF₂)₃H, and CH₂=CF(CF₂)₄H, and C4OLF is preferred.

The amount of the other fluorinated monomer used is, to the amount of the specific monomer used, preferably 0.1 to 30.0 mol%, more preferably 0.1 to 10.0 mol%, further preferably 0.5 to 5.0 mol%.

The specific monomer may contain, in addition to the C₂₋₈ perfluoroolefin, a monomer having no fluorine, other than the above monomer (hereinafter also referred to as "non-fluorinated monomer").

Specific examples of the non-fluorinated monomer include ethylene, propylene, vinyl chloride and vinylidene chloride, and ethylene is preferred. The non-fluorinated monomer may be used in combination of two or more types.

The amount of the non-fluorinated monomer used is, to the amount of the specific monomer used, preferably 10.0 to 70.0 mol%, more preferably 20.0 to 60.0 mol%, further preferably 30.0 to 50.0 mol%. In a case where ethylene is used as the non-fluorinated monomer also, the preferred embodiment of the amount used is the same.

The specific monomer is preferably a polymer constituted by the TFE units and the E units. In this case, the ratio of the TFE units to the E units is, as represented by TFE units/E units, preferably 90.0 to 30.0 mol%/10.0 to 70.0 mol%, more preferably 80.0 to 40.0 mol%/20.0 to 60.0 mol%, further preferably 70.0 to 50.0 mol%/30.0 to 50.0 mol%.

The amount of the specific monomer used is, per 100 parts by mass of the amount of the aqueous medium contained in the aqueous dispersion, used, preferably 1 to 50 parts by mass, more preferably 1 to 40 parts by mass, further preferably 1 to 30 parts by mass.

### <Polymerization initiator X>

In the present production method, the polymerization initiator X is used.

The polymerization initiator X is a polymerization initiator having no hydrophilic group and having a molecular weight of 200 or less.

The hydrophilic group which the polymerization initiator X does not has, may be the hydrophilic group which the above polymer has.

The molecular weight of the polymerization initiator X is 200 or less, preferably 190 or less, more preferably 180 or less. The lower limit is preferably 50 or more, more preferably 100 or more, further preferably 120 or more.

The polymerization initiator X is preferably a compound represented by the formula (X).

R¹-CO-O-O-R² (X)

In the formula (X),
R1 and R2 are each independently a C₁₋₅ alkyl group.

The alkyl group represented as R1 and R2 may be linear or branched, and is preferably branched.

The number of carbon atoms of the alkyl group represented as R1 and R2 is 1 to 5, preferably 2 to 5, more preferably 3 to 5, further preferably 4 or 5, particularly preferably 4.

The alkyl group represented as R1 and R2 is preferably a methyl group, a propyl, a butyl group or a dimethylpropyl group, more preferably a methyl group, an iso-propyl group, a tert-butyl group or a 1,1-dimethylpropyl group.

The polymerization initiator X may be tert-butyl peroxypivalate (hereinafter also referred to as "PBPV"), tert-butyl peroxyisobutyrate (Luperox 80, tert-butyl peroxyisobutyrate), tert-amyl peroxypivalate (Luperox 554) or tert-butyl peroxyacetate (Luperox 7, tert-butyl peroxyacetate), and is preferably PBPV. The polymerization initiator X may be used in combination of two or more types.

The amount of the polymerization initiator X used is, per 100 parts by mass of the amount of the specific monomer used, preferably 0.01 to 5 parts by mass, more preferably 0.01 to 3 parts by mass, further preferably 0.01 to 2 parts by mass.

### <Other component>

In the present production method, at the time of polymerization of the specific monomer, a component other than the above components may further be used.

Specific examples of the other component include reducing agents.

The amount of the other component used is preferably 1 to 2000 ppm per 100 parts by mass of the specific monomer used.

### <Process>

In the present production method, the specific monomer is polymerized in the aqueous dispersion to produce the second fluorinated polymer.

The polymer having a hydrophilic group (particularly the first fluorinated polymer) and the second fluorinated polymer may be copolymerized.

The second fluorinated polymer contains units based on a monomer having a C₂₋₈ perfluoroolefin, and preferably contains units based on TFE (hereinafter also referred to as "TFE units").

The content of the units based on the monomer having a C₂₋₈ perfluoroolefin is, to all units of the second fluorinated polymer, preferably 10.0 to 100.0 mol%, more preferably 30.0 to 70.0 mol%, further preferably 40.0 to 60.0 mol%.

In a case where heat resistance of the second fluorinated polymer is important, it is preferably 90.0 to 99.9 mol%, and in a case where melt-moldability is important, it is preferably 95.0 to 99.0 mol%.

The second fluorinated polymer may further contain units based on the above-described other fluorinated monomer (hereinafter also referred to as "other fluorinated units") or units based on the above-described non-fluorinated monomer (hereinafter also referred to as "non-fluorinated units"), or may contain both of these units.

In particular, the second fluorinated polymer preferably contains units based on a monomer containing a C₂₋₈ perfluoroolefin and the non-fluorinated units, more preferably contains the TFE units and units based on ethylene (hereinafter also referred to as "E units"), further preferably contains a copolymer of TFE and ethylene (hereinafter also referred to as "ETFE").

The content of the other fluorinated units is, to all units of the second fluorinated polymer, preferably 0.1 to 30.0 mol%, more preferably 0.1 to 10.0 mol%, further preferably 0.5 to 5.0 mol%.

The content of the other units is, to all units of the second fluorinated polymer, preferably 10.0 to 70.0 mol%, more preferably 20.0 to 60.0 mol%, further preferably 30.0 to 50.0 mol%.

ETFE contains the TFE units and the E units.

In the ETFE, the content of the E units is, to the total amount of the TFE units and the E units, preferably 20.0 to 70.0 mol%, more preferably 25.0 to 60.0 mol%, further preferably 35.0 to 55.0 mol%.

The total content of the TFE units and the E units is, to all units of ETFE, preferably 80.0 mol% or more, more preferably 85.0 mol% or more, further preferably 90.0 mol% or more. The upper limit is preferably 100.0 mol% or less, more preferably 99.5 mol% or less, further preferably 99.0 mol% or less.

In the second fluorinated polymer, the content of the TFE units is, to all units of the second fluorinated polymer, preferably 90.0 to 100.0 mol%, more preferably 95.0 to 100.0 mol%.

In the present production method, the respective components may be added to the reaction system all at once, or in divided portions. The order of addition of the respective components is not particularly limited. For example, an aqueous dispersion containing the polymer and the aqueous medium may be prepared, and to the aqueous dispersion, the polymerization initiator X is added, or, the aqueous medium and the polymerization initiator X may be mixed, and the polymer is added to the mixture. The preferred embodiment is the order of addition in EXAMPLES.

The specific monomer is charged to a reaction system (polymerization reactor) by a conventional method. The specific monomer may be charged to the reaction system continuously or intermittently so as to keep a predetermined polymerization pressure. Otherwise, the specific monomer may be dissolved in an aqueous medium, and the resulting solution is charged to the reaction system continuously or intermittently.

The polymerization initiator X may be added to the reaction system all at once, or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is, in the case of the batch process, preferably 90 to 1,000 minutes, more preferably 90 to 700 minutes.

The polymerization of the specific monomer is conducted preferably substantially in the absence of an emulsifier.

The emulsifier may be a fluorinated emulsifier having a hydrophilic group or a hydrocarbon-containing surfactant having a hydrophilic group. The polymer having a hydrophilic group used in the present invention does not correspond to the emulsifier.

"Substantially in the absence of the emulsifier" means an environment in which the emulsifier content is 0.03 mass ppm or less to the total mass of the aqueous medium contained in the aqueous dispersion, and the content is preferably 0.02 mass ppm or less, more preferably 0 mass ppm.

### (Fluorinated emulsifier having hydrophilic group)

The fluorinated emulsifier having a hydrophilic group is an emulsifier having a hydrophilic group and a fluorine atom.

As the specific examples of the hydrophilic group, the hydrophilic group which the above polymer has may be mentioned.

The fluorinated emulsifier having a hydrophilic group may be an anionic fluorinated surfactant.

The anionic fluorinated surfactant may be a surfactant of which the moiety excluding the anionic moiety has a total number of carbon atoms of 20 or less, and which has a fluorine atom, or a surfactant of which the anionic moiety has a molecular weight of 800 or less and which has a fluorine atom. The "anionic moiety" refers to a moiety excluding the cation of the fluorinated surfactant.

Specific examples of the anionic fluorinated surfactant include CF₃O(CF₂)₃OCHFCF₂COOH, C₃F₇OCF(CF₃)COOH and CF₃(CF₂)₆COOH.

### (Hydrocarbon-containing surfactant having hydrophilic group)

The hydrocarbon-containing surfactant having a hydrophilic group is a surfactant having a hydrophilic group and a hydrocarbon group.

Specifically, the hydrocarbon-containing surfactant having a hydrophilic group has a hydrophilic group, and it is preferably such that at least one group bonded to a carbon atom constituting its hydrocarbon group is a hydrogen atom, and the carbon atom may be substituted by a chlorine atom, a bromine atom or an iodine atom. The methylene group in the hydrocarbon group may be replaced with -O- or -CO-.

The ratio of hydrogen atoms to groups bonded to carbon atoms of the hydrocarbon-containing surfactant having a hydrophilic group (100 × (total number of hydrogen atoms)/total number of groups bonded to all the carbon atoms) is preferably 75% or more, more preferably 85% or more, further preferably 95% or more. The upper limit is preferably 99% or less.

As the specific examples of the hydrophilic group, the hydrophilic group which the above polymer has may be mentioned.

Specific examples of the hydrocarbon-containing surfactant having a hydrophilic group include an anionic hydrocarbon surfactant, and a nonionic hydrocarbon surfactant having a hydrophilic group.

The anionic hydrocarbon surfactant is a surfactant having an anionic functional group, and having a negatively charged hydrophilic moiety and a hydrophobic moiety having a hydrocarbon group such as an alkyl group.

Specific examples of the anionic hydrocarbon surfactant include a tertiary branched C₁₀ carboxylic acid (Versatic (registered trademark) 10, manufactured by Resolution Performance Products), sodium dodecyl sulfate, and sulfosuccinate surfactant (Lankropol (registered trademark) K8300, manufactured by AkzoNobel Surface Chemistry LLC.).

The nonionic hydrocarbon surfactant having a hydrophilic group is a hydrocarbon surfactant having no ionic functional group and having a hydrophilic group other than the ionic functional group (for example, a hydroxy group).

The nonionic hydrocarbon surfactant having a hydrophilic group preferably has a hydrophobic moiety having a long chain hydrocarbon group and a hydrophilic moiety having a polyoxyalkylene chain. The nonionic hydrocarbon surfactant having a hydrophilic group has a hydrophilic group in at least one of the hydrophobic moiety and the hydrophilic moiety, and has a hydrophilic group preferably in the hydrophilic moiety.

As described above, for example, it is estimated that the specific monomer is polymerized in the particles of the polymer at the time of polymerization of the specific monomer, and thus it is considered that particles containing the polymer having a hydrophilic group and the second fluorinated polymer are formed by the present production method. That is, it is estimated that according to the present production method, the second fluorinated polymer is obtained in the form of particles containing the polymer having a hydrophilic group and the second fluorinated polymer. In this case, by the present production method, an aqueous dispersion having the particles that contain the polymer having a hydrophilic group and the second fluorinated polymer, dispersed in the aqueous medium, is obtained.

### [Aqueous dispersion]

The aqueous dispersion of the present invention (hereinafter sometimes referred to as "the present aqueous dispersion") is an aqueous dispersion that contains an aqueous medium, a polymer having a hydrophilic group, and a second fluorinated polymer.

The present aqueous dispersion may be obtained, for example, by the present production method described above.

### <Polymer having hydrophilic group and second fluorinated polymer>

The polymer having a hydrophilic group is the same as the polymer having a hydrophilic group in the present production method described above, and the preferred embodiment is also the same.

The polymer having a hydrophilic group is preferably the first fluorinated polymer.

The content of the polymer having a hydrophilic group is preferably 0.10 to 1.0 mass%, more preferably 0.15 to 0.80 mass%, further preferably 0.20 to 0.60 mass%, to the total mass of the present aqueous dispersion.

The second fluorinated polymer is the same as the second fluorinated polymer in the present production method described above, and the preferred embodiment is also the same.

The content of the second fluorinated polymer is preferably 10 to 40 mass%, more preferably 12 to 35 mass%, further preferably 15 to 30 mass% to the total mass of the present aqueous dispersion.

The total content of the polymer having a hydrophilic group and the second fluorinated polymer is preferably 10 to 40 mass%, more preferably 12 to 35 mass%, further preferably 15 to 35 mass% to the total mass of the present aqueous dispersion.

The polymer having a hydrophilic group and the second fluorinated polymer may be present in the present aqueous dispersion separately, however, they are present preferably in the form of particles containing the polymer having a hydrophilic group and the second fluorinated polymer.

In such a case, the average particle size of the particles is preferably 500 µm or less, more preferably 450 µm or less, further preferably 400 µm or less, in view of dispersion stability.

Further, the average particle size of the particles is preferably 50 nm or more, more preferably 80 nm or more, further preferably 100 nm or more, in view of coagulation property.

The average particle size of the particles is a particle size at which the cumulative volume is 50% on a cumulative curve obtained by measuring the particle size distribution by laser diffraction/scattering method and taking the whole volume of the group of particles to be 100%.

### <Aqueous medium>

The aqueous medium is one similar to the specific examples of the aqueous medium used for production of the second fluorinated polymer described above.

The content of the aqueous medium is preferably 50 to 99 mass%, more preferably 60 to 99 mass%, further preferably 70 to 99 mass% to the total mass of the present aqueous dispersion, in view of dispersion stability of the specific particles.

### <Application>

The present aqueous dispersion can easily be formed into a dispersion the medium of which is an organic solvent such as N-methyl pyrrolidone or acetone by solvent replacement.

For example, the present aqueous dispersion may be mixed with an organic solvent and dehydrated by evaporation or over anhydrous sodium sulfate, to be formed into a dispersion the medium of which is the organic solvent.

The present aqueous dispersion is capable of stably dispersing the fluorinated polymer even without containing the emulsifier. Thus, the present aqueous dispersion is suitably used for e.g. coting application, binder application.

A powder of the polymer having a hydrophilic group and the second fluorinated polymer can be obtained by coagulating the polymer having a hydrophilic group and the second fluorinated polymer (preferably particles containing the polymer having a hydrophilic group and the second fluorinated polymer) from the present aqueous dispersion.

The coagulation method may be freeze coagulation, acid coagulation, base coagulation or coagulation using a coagulant.

In the case of freeze coagulation, the coagulation temperature is preferably -20 to 0°C. The coagulation time is preferably 1 hour or more, more preferably 2 hours or more.

In the case of acid coagulation, preferred is a method of adding a solution containing an acid to the present aqueous dispersion. The acid to be added may, for example, be hydrochloric acid, nitric acid, sulfuric acid, oxalic acid or hydrofluoric acid, and is preferably hydrochloric acid. The concentration of the acid in the solution containing the acid is preferably 0.1 to 50 mass%, more preferably 1 to 30 mass%, further preferably 1 to 10 mass%.

Base coagulation is preferably a method of adding a solution containing a base to the present aqueous dispersion. The base to be added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

For coagulation by a coagulant, a conventional coagulant may be used. The coagulant may, for example, be an aluminum salt, a calcium salt or a magnesium salt. It is preferably aluminum sulfate, alum represented by the formula M'Al(SO₄)₂·12H₂O (wherein M' is a monovalent cation other than lithium), calcium nitrate or magnesium sulfate, more preferably alum, further preferably potassium alum wherein M is potassium.

The coagulation method is preferably the base coagulation, whereby the coagulation is particularly likely to proceed.

### [Solid composition]

The solid composition of the present invention (hereinafter sometimes referred to as "the present solid composition") contains the polymer having a hydrophilic group and the second fluorinated polymer.

In this specification, the solid composition means a composition having a solid content mass of 99 mass% or more.

The solid content mass is calculated by the following method based on the mass before and after heating.

2.0 g of the solid composition is heated at 170°C for 20 minutes, the mass of the residue is weighed, and the solid content mass is calculated in accordance with the following formula. $Solid content mass \left(mass%\right) = 100 \times \left(mass of residue\right) / \left(mass of solid composition\right)$

The present solid composition is obtained preferably by coagulation using the above present aqueous dispersion. The preferred embodiment of the present solid composition is the same as the preferred embodiment of the polymer having a hydrophilic group and the second fluorinated polymer contained in the present aqueous dispersion, and its description is omitted.

The polymer having a hydrophilic group and the second fluorinated polymer may be present in the present solid composition separately but are preferably present in the form of particles containing the polymer having a hydrophilic group and the second fluorinated polymer.

The content of the polymer having a hydrophilic group is preferably 0.1 to 5 mass%, more preferably 0.2 to 4 mass%, further preferably 0.3 to 3 mass% to the total mass of the present solid composition.

The content of the second fluorinated polymer is preferably 95 to 99.9 mass%, more preferably 96 to 99.8 mass%, further preferably 97 to 99.7 mass% to the total mass of the present solid composition.

The total content of the polymer having a hydrophilic group and the second fluorinated polymer is preferably 99.0 to 100 mass%, more preferably 99.5 to 100 mass%, further preferably 99.8 to 100 mass% to the total mass of the present solid composition.

### EXAMPLES

Now, the present invention will be described in further detail with reference to Examples. Ex. 1 to 3 are Examples of the present invention, and Ex. 4 and 5 are Comparative Examples. However, it should be understood that the present invention is by no means restricted thereto.

### [Measurement and evaluation methods]

The measurement methods and evaluation methods are as follows.

### <Average particle size of particles in dispersion>

The material dispersion was deaerated at room temperature (25°C) for 5 minutes, pressurized to 0.2 MPaG with nitrogen, and then purged to atmospheric pressure, to obtain a measurement sample. The particle size of the obtained sample was measured by a laser diffraction/scattering particle size distribution measuring apparatus (manufactured by Otsuka Electronics Co., Ltd., ELSZ) setting the number of measurements to 100 times. D50 was calculated from the measured particle sizes within a range of 1 to 300 nm, which was taken as the average particle size of the particles in the material dispersion.

The average particle size of the particles in the aqueous dispersion corresponding to the material dispersion, measured in the same manner as the material dispersion, was the same as the average particle size of the particles in the material dispersion. The aqueous dispersion corresponding to the material dispersion means, in the case of the after-described Example 1, the aqueous dispersion A corresponding to the material dispersion A.

The average particle size (D50) of the particles in the aqueous dispersion in each Ex. obtained by using the aqueous dispersion corresponding to the material dispersion, was measured by a laser diffraction/scattering particle size distribution measuring apparatus (manufactured by Otsuka Electronics Co., Ltd., ELSZ). The range of the particle sizes to be measured was not limited as different from the method of measuring the average particle size of the particles in the material dispersion. The aqueous dispersion in each Ex. obtained by using the aqueous dispersion corresponding to the material dispersion means, in the case of the after-described Ex. 1, the aqueous dispersion 1 obtained by using the aqueous dispersion A.

### <Ratio of units in polymer having hydrophilic group and fluorinated polymer>

The ratio of each units in the polymer having a hydrophilic group was obtained by ¹⁹F-NMR analysis and infrared absorption spectrum analysis.

### [Production of material dispersion A]

Into a 1.3 L stainless steel pressure resistant reactor, ultrapure water (717 g), PMVE (63 g) and TFE (10 g) were charged and heated to 80°C. An aqueous ammonium persulfate solution (3.6 mass%, 5 cc) was added to initiate polymerization. Since the pressure in the reactor decreased along with the start of the polymerization, TFE was added to keep a constant pressure. Upon injection of 2 g of TFE, the reactor was cooled to terminate the polymerization reaction. The gas remaining in the reactor was recovered, and the liquid was withdrawn. This liquid was taken as material dispersion A.

The material dispersion A was freeze-coagulated and subjected to filtration, and the obtained fluorinated polymer 1A was washed with ultrapure water, and vacuumdried at 100°C. The obtained fluorinated polymer 1A was analyzed by NMR and as a result, PMVE units/ TFE units=47.3/52.7 (molar ratio).

### [Production of material dispersion B]

To the material dispersion A (200 g), an anion exchange resin (tradename: Purolite A300, manufactured by Purolite) (4 g) was added and stirred for 20 minutes. The anion exchange resin (2 g) was added every 20 minutes. 60 minutes after the start of stirring, the mixture was subjected to filtration to separate the material dispersion and the ion exchange resin thereby to obtain material dispersion B. The material dispersion B had particles of the fluorinated polymer 1A (average particle size: 80 nm) dispersed in the aqueous medium, and the content of the fluorinated polymer 1A was 0.53 mass% to the total mass of the material dispersion B.

### [Ex. 1]

Into a 1.2 L stainless steel pressure resistant reactor, ultrapure water (343 g), the material dispersion B (370 mL) and C4OLF (0.3 g) were charged to obtain aqueous dispersion A.

The aqueous dispersion A was heated to 60°C. A gas mixture (TFE/ethylene=86/14 (molar ratio)) was injected until the pressure in the reactor reached 2.6 MPaG, and an isododecane (tradename MARUKASOL, manufactured by Maruzen Petrochemical Co., Ltd.) solution of PBPV (40 mass%, 4 cc) was added to initiate polymerization. Since the pressure in the reactor decreased along with the start of the polymerization, a CG gas mixture (TFE/ethylene=54/46 (mol%)) was added to keep a constant pressure. C4OLF was continuously added in an amount of 1 mol% to the amount of the CG gas added. Upon injection of 160 g of the CG gas mixture, the reactor was cooled to terminate the polymerization reaction. The polymerization time was 356 minutes. The gas remaining in the reactor was recovered, and the liquid was withdrawn. This liquid was taken as aqueous dispersion 1.

The aqueous dispersion 1 was a dispersion that had particles containing fluorinated polymer 2A (average particle size: 268 nm) dispersed in the aqueous medium, and had a solid content concentration of 20.3 mass%.

The obtained particles were coagulated and dried, and the composition was calculated by NMR and as a result, TFE units/E units/C4OLF units/PMVE units=54.3/44.1/1.0/0.6 (molar ratio).

### [Ex. 2]

Into a 1.2 L stainless steel pressure resistant reactor, ultrapure water (343 g), the material dispersion B (370 mL) and C4OLF (0.3 g) were charged to obtain aqueous dispersion A.

The aqueous dispersion A was heated to 60°C. A gas mixture (TFE/ethylene=90/10 (molar ratio)) was injected until the pressure in the reactor reached 2.6 MPaG, and an isododecane (tradename MARUKASOL, manufactured by Maruzen Petrochemical Co., Ltd.) solution of PBPV (40 mass%, 4 cc) was added to initiate polymerization. Since the pressure in the reactor decreased along with the start of the polymerization, a CG gas mixture (TFE/ethylene=56/44 (mol%)) was added to keep a constant pressure. C4OLF was continuously added in an amount of 3.6 mol% to the amount of the CG gas added. Upon injection of 130 g of the CG gas mixture, the reactor was cooled to terminate the polymerization reaction. The polymerization time was 591 minutes. The gas remaining in the reactor was recovered, and the liquid was withdrawn. This liquid was taken as aqueous dispersion 2.

The aqueous dispersion 2 was a dispersion that had particles containing fluorinated polymer 2B (average particle size: 340 nm) dispersed in the aqueous medium, and had a solid content concentration of 17.7 mass%.

The obtained particles were coagulated and dried, and the composition was calculated by NMR and as a result, TFE units/E units/C4OLF units/PMVE units=57.0/38.5/3.6/0.9 (molar ratio).

### [Ex. 3]

Into a 1.2 L stainless steel pressure resistant reactor, ultrapure water (528 g), the material dispersion B (185 mL) and C4OLF were charged to obtain aqueous dispersion A.

The aqueous dispersion A was heated to 60°C. A gas mixture (TFE/ethylene=86/14 (molar ratio)) was injected until the pressure in the reactor reached 2.6 MPaG, and an isododecane (tradename MARUKASOL, manufactured by Maruzen Petrochemical Co., Ltd.) solution of a polymerization initiator (tradename Luperox 554, manufactured by ARKEMA Yoshitomi, Ltd.) (40 mass%, 2 cc) was added to initiate polymerization. Since the pressure in the reactor decreased along with the start of the polymerization, a CG gas mixture (TFE/ethylene=54/46 (mol%)) was added to keep a constant pressure. C4OLF was continuously added in an amount of 1.0 mol% to the amount of the CG gas added. Upon injection of 80 g of the CG gas mixture, the reactor was cooled to terminate the polymerization reaction. The polymerization time was 410 minutes. The gas remaining in the reactor was recovered, and the liquid was withdrawn. This liquid was taken as aqueous dispersion 3.

The aqueous dispersion 3 was a dispersion that had particles containing fluorinated polymer 3B (average particle size: 303 nm) dispersed in the aqueous medium, and had a solid content concentration of 10.8 mass%.

The obtained particles were coagulated and dried, and the composition was calculated by NMR and as a result, TFE units/E units/C4OLF units/PMVE units=54.3/43.9/1.2/0.6 (molar ratio).

### [Ex. 4]

Into a 1.2 L stainless steel pressure resistant reactor, ultrapure water (428 g), the material dispersion B (185 mL), C4OLF (0.3 g) and t-BuOMe (1 g) were charged to obtain aqueous dispersion B.

The aqueous dispersion B was heated to 60°C. A gas mixture (TFE/ethylene=86/14 (molar ratio)) was injected until the pressure in the reactor reached 2.6 MPaG, and an aqueous KPS (potassium persulfate) solution (5 mass%, 10 cc) was added to initiate polymerization. Since the pressure in the reactor decreased along with the start of the polymerization, a CG gas mixture (TFE/ethylene=54/46 (mol%)) was added to keep a constant pressure. C4OLF was continuously added in an amount of 1 mol% to the amount of the CG gas added. Upon injection of 80 g of the CG gas mixture, the reactor was cooled to terminate the polymerization reaction. The polymerization time was 190 minutes. The gas remaining in the reactor was recovered, and the liquid was withdrawn. This liquid was taken as aqueous dispersion 4.

The aqueous dispersion 4 was a dispersion that had particles containing fluorinated polymer 2C (average particle size: 306 nm) dispersed in the aqueous medium, and had a solid content concentration of 11.2 mass%.

The obtained particles were coagulated and dried, and the composition was calculated by NMR and as a result, TFE units/E units/C4OLF units/PMVE units=54.1/44.4/0.9/0.6 (molar ratio).

### [Ex. 5]

Into a 1.2 L stainless steel reactor, ultrapure water (428 g), the material dispersion B (185 mL), C4OLF (0.3 g) and t-BuOMe (1 g) were charged to obtain aqueous dispersion B.

The aqueous dispersion B was heated to 60°C. A gas mixture (TFE/ethylene=86/14 (molar ratio)) was injected until the pressure in the reactor reached 2.6 MPaG, and a t-butyl peroxyneodecanoate solution (40 mass%, 4 cc) was added to initiate polymerization. However, even after 100 minutes, no decrease of the polymerization pressure was confirmed, and the second fluorinated polymer could not be obtained.

### [Evaluation]

### <Heat resistance>

The particles contained in each of the aqueous dispersions 1 to 4 in Ex. were coagulated and dried to obtain coagulate in each Ex. A 1 mm thick sheet was prepared from the obtained coagulate, and Y.I. and CIE W were obtained by transmission by a color meter (SM Color Meter, manufactured by Suga Test Instruments Co., Ltd.). The Y.I. and CIE W values are shown in Table 1.

"Y.I." is an index indicating yellowness, and a higher Y.I. indicates high yellowness. "CIE W" is an index indicating whiteness, and a lower CIE W indicates high blackness. That is, the Y.I. value is preferably lower and the CIE W value is preferably higher.

The 1 mm thick sheet was obtained by heating 2 g of the coagulate at 300°C for 10 minutes and press-molded at 300°C under 10 MPa for 5 minutes, followed by cooling.

In Ex. 5, the aqueous dispersion containing the second fluorinated polymer was not obtained, and coloring evaluation could not be conducted.

**[Table 1]**

| | | Ex. 1 | Ex. 2 | Ex. 3 | Ex. 4 | Ex. 5 |
|---|---|---|---|---|---|---|
| Heat resistance | Y.I. | 15 | 9 | 11 | 38 | - |
| | CIE W | 88 | 89 | 87 | 71 | - |

It was confirmed that according to the present production method, a fluorinated polymer excellent in heat resistance can be produced (Ex. 1 to 5).

The entire disclosure of Japanese Patent Application No. 2023-181636 filed on October 23, 2023 including specification, claims and summary is incorporated herein by reference in its entirety.

## Claims

1. A method for producing a fluorinated polymer, which comprises polymerizing a monomer containing a C₂₋₈ perfluoroolefin using a polymerization initiator X in an aqueous dispersion that contains a polymer having a hydrophilic group and an aqueous medium to produce a fluorinated polymer,
wherein the polymerization initiator X has no hydrophilic group and has a molecular weight of 200 or less.

2. The method for producing a fluorinated polymer according to Claim 1, wherein the polymerization initiator X is a compound represented by the formula (X):
R¹-CO-O-O-R² (X)
in the formula (X), R1 and R2 are each independently a C₁₋₅ alkyl group.

3. The method for producing a fluorinated polymer according to Claim 1 or 2,
wherein the polymer having a hydrophilic group is a fluorinated polymer having a hydrophilic group.

4. The method for producing a fluorinated polymer according to Claim 1 or 2,
wherein the polymer having a hydrophilic group contains units based on tetrafluoroethylene and units based on a perfluoro(alkyl vinyl ether).
